# EUROPÄISCHE PATENTANMELDUNG

(11) **EP 0 751 326 A2**
(43) Veröffentlichungstag der Anmeldung: **02.01.1997**
(21) Anmeldenummer: 96107087.7
(22) Anmeldetag: 14.05.1996
(51) Int. Cl.: F16K 37/00

(54) **Vorrichtung zur Ueberwachung des Ventilhubs eines Membranventils**

(30) Priorität: 29.06.1995 CH 1907/95
(71) Anmelder: Georg Fischer Rohrleitungssysteme AG, CH-8201 Schaffhausen (CH)
(72) Erfinder: Heiniger, Martin, 8200 Schaffhausen (CH)
(74) Vertreter: Szilagyi, Marianne

(57) **Zusammenfassung**

Bei einer Vorrichtung zur Ueberwachung des Ventilhubs eines pneumatisch oder hydraulisch angetriebenen, einen über eine Druckspindel (16) betätigbaren Ventilkörper aufweisenden Ventils, insbesondere eines Membranventils, steht eine Schaltspindel (20) mit der Druckspindel (16) in Wirkverbindung. Zur Betätigung eines als Signalgeber für die Ventilstellung dienenden Messelementes ist an der Schaltspindel (20) ein Steuerelement (38) angeordnet. Das Steuerelement (38) weist eine gegenüber der Betätigungsachse (z) der Schaltspindel (20) geneigte Steuerfläche (40) auf und am Ventil ist ein den der Ventilstellung entsprechenden Abstand zur Steuerfläche (40) messender Wegaufnehmer (36) festgelegt.

Mit der Vorrichtung kann der Ventilhub über den gesamten Stellungsbereich des Ventils kontinuierlich überwacht werden.

Zur selbsttätigen Positionierung des Steuerelementes (38) bei der erstmaligen Ventilbetätigung ist ein als Mitnehmer wirkender Anschlag (24) unterhalb des Steuerelementes (38) angeordnet und das Steuerelement (38) ist an der Schaltspindel (20) klemmend verschiebbar befestigt.

## Beschreibung

Die Erfindung betrifft eine Vorrichtung zur Ueberwachung des Ventilhubs eines pneumatisch oder hydraulisch angetriebenen, einen über eine Druckspindel betätigbaren Ventilkörper aufweisenden Ventils, insbesondere eines Membranventils, wobei eine Schaltspindel mit der Druckspindel in Wirkverbindung steht und an der Schaltspindel ein Steuerelement zur Betätigung eines als Signalgeber für die Ventilstellung dienenden Messelementes angeordnet ist.

Sogenannte elektrische Rückmelder der eingangs erwähnten Art werden eingesetzt zur Rückmeldung der Ventilstellung in Verbindung mit pneumatisch oder hydraulisch angetriebenen Hubventilen. Hierbei werden jeweils in den beiden Endstellungen des Ventilhubs über einen an der Schaltspindel festgelegten Schaltnocken Endschalter betätigt, wodurch ein der Offen- bzw. Geschlossenstellung des Ventils entsprechendes elektrisches Signal erzeugt wird. Dieses elektrische Signal kann sodann beispielsweise an eine Steuerung oder ein Schaltpult weitergegeben werden.

Mit den vorbekannten Rückmeldern können lediglich 2 Stellungen des Ventils ermittelt werden. Jede andere zwischen offener und geschlossener Stellung des Ventils liegende Zwischenstellung ist zwar optisch aus der jeweiligen Lage der Schaltspindel ersichtlich, jedoch ist eine kontinuierliche Ueberwachung des Ventilhubs über den gesamten Stellungsbereich des Ventils durch ein zum Ventilhub proportionales elektrisches Signal, welches z.B. an eine Steuerung oder ein Schaltpult weitergegeben werden kann, nicht möglich.

Angesichts dieser Gegebenheiten hat sich der Erfinder die Aufgabe gestellt, eine Vorrichtung der eingangs erwähnten Art zu schaffen, mit der eine kontinuierliche Ueberwachung des Ventilhubs über den gesamten Stellungsbereich des Ventils möglich ist.

Zur erfindungsgemässen Lösung der Aufgabe führt, dass das Steuerelement eine gegenüber der Betätigungsachse der Schaltspindel geneigte Steuerfläche aufweist und am Ventil ein den der Ventilstellung entsprechenden Abstand zur Steuerfläche messender Wegaufnehmer festgelegt ist.

Spezielle und weiterbildende Ausbildungsformen der erfindungsgemässen Vorrichtung sind Gegenstand von abhängigen Patentansprüchen.

Durch die erfindungsgemäss geneigte Steuerfläche des Steuerelementes ändert sich bei einer Verschiebung der Schaltspindel der Abstand der Steuerfläche zu dem bezüglich des Ventils ortsfesten Wegaufnehmer und am Ausgang des Wegaufnehmers wird ein zum Ventilhub proportionales elektrisches Analogsignal erzeugt. Dadurch wird eine kontinuierliche Ueberwachung des Ventilhubs über den gesamten Stellungsbereich des Ventils möglich.

Bei einer bevorzugten Ausgestaltung der erfindungsgemässen Vorrichtung ist das Steuerelement als im wesentlichen kegelartiger Körper mit konischer Steuerfläche an der Schaltspindel konzentrisch zu deren Achse angeordnet. Hierbei ist das Steuerelement an der Schaltspindel bevorzugt klemmend verschiebbar befestigt, so dass eine Aenderung der Position ohne allzu grossen Kraftaufwand vorgenommen werden kann.

Bei einer besonders zweckmässigen Ausführungsform der erfindungsgemässen Vorrichtung ist zur Positionierung des Steuerelementes an der Schaltspindel ein als Mitnehmer wirkender Anschlag unterhalb des Steuerelementes angeordnet. Mit dieser Anordnung wird das Steuerelement beim erstmaligen Schliessen des Ventils selbsttätig in seine richtige Arbeitsposition verschoben. Auch bei einem allfälligen Setzvorgang der Mediumsmembrane während der Lagerung oder dem Betrieb des Ventilantriebs wird das Steuerelement über den Anschlag jeweils selbsttätig nachjustiert.

Bevorzugt wird als Wegaufnehmer ein induktiver Wegaufnehmer eingesetzt. Der induktive Wegaufnehmer hat gegenüber mechanischen Einrichungen den Vorteil, dass er berührungslos und verschleissfrei arbeitet.

Zur weiteren Erhöhung der Funktionssicherheit der Vorrichtung ist die Schaltspindel mit der Druckspindel kraftschlüssig gekoppelt. Ein montagebedingter radialer Versatz sowie Winkelfehler sind zulässsig und werden durch die Kupplung aufgenommen. Des weiteren ist die Vorrichtung bevorzugt derart ausgestaltet, dass sie in den Gehäusedeckel eines Ventilgehäuses einschraubbar ist.

Zum Schutz des Rückmelders vor Verschmutzung wird dieser bevorzugt von einer durchsichtigen Abdeckhaube umschlossen. Diese kann zur sichtbaren Messung des Ventilhubs mit einer Skala versehen sein.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: eine teilweise geschnittene Seitenansicht eines Rückmelders;
- Fig. 2: die Draufsicht auf den Rückmelder von Fig. 1 ohne Abdeckhaube und Gerätestecker.

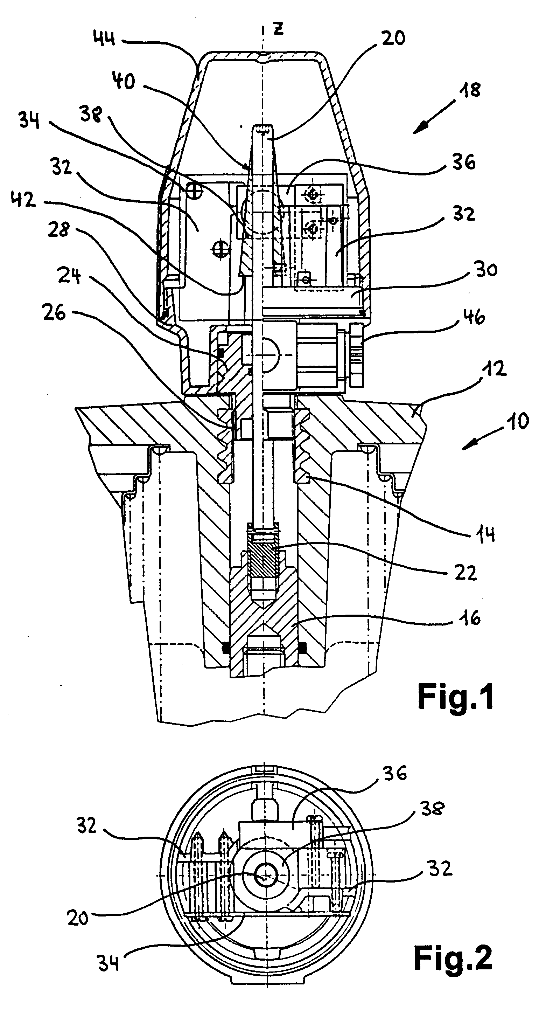

Ein aus Gründen der besseren Uebersicht in der Zeichnung nur teilweise wiedergegebenes Ventilgehäuse 10 eines nicht näher dargestellten Membranventils weist gemäss Fig. 1 einen Gehäusedeckel 12 auf, in welchem zentral eine Gewindebüchse 14 angeordnet ist. Dem Ventilgehäuse 10 aufgesetzt ist ein Rückmelder 18 mit einer Schaltspindel 20, die über ein Kupplungsstück 22 mit einer Druckspindel 16 verbunden ist. Der Rückmelder 18 ist über ein zentral angeordnetes Schraubteil 24 mit Aussengewinde 26 in die Gewindebüchse 14 eingeschraubt. Die Schaltspindel 20 durchsetzt hierbei das Schraubteil 24 in Richtung der Betätigungsachse z.

Das Schraubteil 24 wird von einem Trägerteil 28 umgriffen. Von diesem Trägerteil 28 ragen parallel zur Achsenrichtung z angeordnete Montagewände 32 auf, an welchen eine Leiterplatte 34 sowie ein induktiver Wegaufnehmer 36 an sich bekannter Bauart festgelegt sind.

An der Schaltspindel 20 ist ein kegelartiger Körper 38 mit konisch gegen das freie Ende der Schaltspindel 20 zulaufender Mantelfläche 40 konzentrisch zur Spindelachse z klemmend verschiebbar befestigt. Das Schraubteil 24 liegt unterhalb des kegelartigen Körpers 38 und umschlingt die Schaltspindel 20 derart, dass es einen Anschlag für die Bodenfläche 42 des kegelartigen Körpers 38 bildet und demzufolge als Mitnehmer für den kegelartigen Körper 38 wirken kann.

Bei jeder Verschiebung der Schaltspindel 20 in ihrer Bewegungsrichtung z ändert sich der Abstand zwischen der konischen Mantelfläche bzw. Steuerfläche 40 und dem induktiven Wegaufnehmer 36 proportional zum Ventilhub. Dadurch wird am induktiven Wegaufnehmer 36 ein entsprechendes Analog-Ausgangssignal erzeugt, welches zur Ueberwachung, Aufzeichnung oder Steuerung weiter verwendet werden kann. Um einerseits den Nullpunkt zu justieren und damit mechanische und elektronische Toleranzen auszugleichen sowie andererseits den Hubbereich verschiedener Membranventile mit einer einzigen Rückmelder-Ausführung abzudecken, ist die Leiterplatte entsprechend mit zwei Potentiometern bestückt.

Der Rückmelder 18 ist zum Schutz gegen Verschmutzung mit einer das Trägerteil 28 übergreifenden durchsichtigen Abdeckhaube 44 versehen. Zur Herausführung der elektrischen Verbindungskabel aus dem Rückmelder 18 ist seitlich am Trägerteil 28 ein Kanal mit einem Gerätestecker 46 angeordnet.

Aus Fig. 1 ist klar ersichtlich, dass beim erstmaligen Schliessen des Ventils durch die Mitnehmerwirkung des Schraubteils 24 während der Schliessbewegung des Ventils eine Verschiebung des kegelartigen Körpers 38 in seine endgültige Arbeitsposition erfolgt. Diese selbsttätige Anpassung des kegelförmigen Körpers 38 an den Ventilhub tritt auch bei einem allfälligen Setzvorgang der Mediumsmembrane ein, d.h. der kegelförmige Körper 38 wird automatisch nachjustiert.

## Patentansprüche

1. Vorrichtung zur kontinuierlichen Messung des Ventilhubs eines pneumatisch oder hydraulisch angetriebenen, einen über eine Druckspindel (16) betätigbaren Ventilkörper aufweisenden Ventils, insbesondere eines Membranventils, wobei eine Schaltspindel (20) mit der Druckspindel (16) in Wirkverbindung steht und an der Schaltspindel (20) ein Steuerelement zur Betätigung eines als Signalgeber für die Ventilstellung dienenden Messelementes angeordnet ist,dadurch gekennzeichnet, dass das Steuerelement (38) eine gegenüber der Betätigungsachse (z) der Schaltspindel (20) geneigte Steuerfläche (40) aufweist und am Ventil ein den der Ventilstellung entsprechenden Abstand zur Steuerfläche (40) messender Wegaufnehmer (36) festgelegt ist.

2. Vorrichtung nach Anspruch 1, dadurch gekennzeichnet, dass das Steuerelement (38) als im wesentlichen kegelartiger Körper mit konischer Steuerfläche (40) an der Schaltspindel (20) konzentrisch zu deren Achse (z) angeordnet ist.

3. Vorrichtung nach Anspruch 1 oder 2, dadurch gekennzeichnet, dass das Steuerelement (38) an der Schaltspindel (28) klemmend verschiebbar befestigt ist.

4. Vorrichtung nach einem der Ansprüche 1 bis 3, dadurch gekennzeichnet, dass zur Positionierung des Steuerelementes (38) an der Schaltspindel (20) ein als Mitnehmer wirkender Anschlag (24) unterhalb des Steuerelementes (38) angeordnet ist.

5. Vorrichtung nach einem der Ansprüche 1 bis 4, dadurch gekennzeichnet, dass der Wegaufnehmer (36) als induktiver Wegaufnehmer ausgebildet ist.

6. Vorrichtung nach einem der Ansprüche 1 bis 5, dadurch gekennzeichnet, dass die Schaltspindel (20) kraftschlüssig mit der Druckspindel (16) gekoppelt ist.

7. Vorrichtung nach einem der Ansprüche 1 bis 6, dadurch gekennzeichnet, dass sie in den Gehäusedeckel (12) eines Ventilgehäuses (10) einschraubbar ist.

8. Vorrichtung nach einem der Ansprüche 1 bis 7, dadurch gekennzeichnet, dass der das Steuerelement (38) tragende Teil der Schaltspindel (20) und der Wegaufnehmer (36) von einer durchsichtigen Abdeckhaube (44) umschlossen sind.

9. Vorrichtung nach Anspruch 8, dadurch gekennzeichnet, dass die Abdeckhaube (44) mit einer Skala zur sichtbaren Messung des Ventilhubs versehen ist.

10. Vorrichtung nach einem der Ansprüche 1 bis 9, dadurch gekennzeichnet, dass die Abdeckhaube 44 des Rückmelders 18 auf der Hülse 24 verdreh- und arretierbar ist, in dem Masse, wie es für die zweckmässige Lage des Anschlusssteckers 46 nötig ist.
